(19) Europäisches Patentamt
European Patent Office
Office européen des brevets

(11) EP 0 940 405 B1

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(51) Int Cl.[7]: **C07F 7/18**, C07C 6/06

(21) Anmeldenummer: **98124460.1**

(22) Anmeldetag: **23.12.1998**

(54) **Alkenylgruppen aufweisende Organosiliciumverbindungen**

Organosilicon compounds containing alkenyl groups

Composés organosilicium contenant des groupes alcényles

(84) Benannte Vertragsstaaten:
**DE FR GB**

(30) Priorität: **05.03.1998 DE 19809551**

(43) Veröffentlichungstag der Anmeldung:
**08.09.1999 Patentblatt 1999/36**

(73) Patentinhaber: **Wacker-Chemie GmbH
81737 München (DE)**

(72) Erfinder:
- **Herzig, Christian, Dr.
83329 Waging am See (Feichten) (DE)**
- **Deubzer, Bernward, Dr.
84489 Burghausen (DE)**
- **Weis, Johann, Dr.
82054 Sauerlach (DE)**
- **Karlou-Eyrisch, Kamelia
80538 München (DE)**
- **Nuyken, Oskar, Prof. Dr.
81927 München (DE)**

(74) Vertreter: **Budczinski, Angelika et al
c/o Wacker-Chemie GmbH,
Zentralabteilung PML,
Hanns-Seidel-Platz 4
81737 München (DE)**

(56) Entgegenhaltungen:
**DE-A1- 4 128 932** **US-A- 5 264 606**

- **FINKELSHTEIN, E.Sh. et al. Olefin Metathesis in organo- silicon chemistry. YAVUZ IMAMOGLU (ed.), Meta- thesis Polymerization of Olefins and Polymerization of Alkynes, 1998, Band 506, Seiten 201-224, XP002900463, speziell die Seiten 218-219.**
- **FINKELSHTEIN, E.Sh. et al. Ring-opening metathesis poly- merization of norbornenes with organosilicon substi- tuents. Gas permeability of polymers obtained. Die Makro- molekulare Chemie, 1991, Band 192, Seiten 1-9, XP002900464, speziell der ganze Artikel.**
- **'Ullmanns Encyklopädie der technischen Chemie'**

EP 0 940 405 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

In Polym. Repr. 33 (1), 1078 (Wagener, Smith) sind Ringschlußreaktionen von olefinischen Si-Verbindungen beschrieben, wobei Ethylen abgespalten wird. Bespielsweise werden 1,3-Diallyldisiloxane zu ungesättigten 7-Ringen cyclisiert und Siloxane mit längeren 1-Alkenylresten polymerisiert.

Ähnliche Kupplungsreaktionen sind aus J. Organomet. Chem. 447 (1993) 2, 163-166 (Marciniec) und Appl. Organomet. Chem. 1997, 11 (8), 667-671 (Marciniec) bekannt. Hierbei werden Silane mit endständigen Doppelbindungen, wie Si-gebundenen Vinylgruppen, mit anderen Olefinen umgesetzt. Die erhaltenen Produkte sind nicht reaktiv in Hydrosilylierungsreaktionen.

Gemäß Angew. Chem. 1997, 109 (3), 257-259 (Schneider et al.) bzw. dem korrespondierenden Chemical Abstract 126 : 237970 wird Allyltrimethylsilan als Ringöffnungsreagens für Cycloolefine verwendet, wobei Silane mit einer terminalen C=C-Gruppe entstehen.

In US-A 5,264,606 (Union Carbide Chemicals & Plastics Technology Corporation, ausgegeben am 23.11.1993) ist ein Verfahren zur Herstellung von monomerischen Polyvinylverbindungen und deren Oligomeren durch Cross-Metathese von Norbornen oder substituiertem Norbornen, wie 5-Triethoxysilyl-2-norbornen, mit Ethylen unter heterogener Katalyse in Gegenwart von aktivierten Rheniumoxid-Festbettkatalysatoren beschrieben.

Es bestand die Aufgabe, Alkenylgruppen aufweisende Organosiliciumverbindungen bereitzustellen, die in einem einfachen Verfahren unter Verwendung einfach zugänglicher Ausgangsstoffe hergestellt werden können, wobei das Verfahren es erlaubt, an einem Si-Atom zwei terminale Alkenylgruppen einzuführen. Die Aufgabe wird durch die Erfindung gelöst.

Gegenstand der Erfindung sind Alkenylgruppen aufweisende Organosiliciumverbindungen mit Einheiten der allgemeinen Formel

$$A_aR_b(R^1O)_cSiO_{\frac{4-(a+b+c)}{2}} \quad \text{(I)},$$

wobei R gleich oder verschieden ist, einen einwertigen, von aliphatischen Kohlenstoff-Kohlenstoff-Mehrfachbindungen freien Kohlenwasserstoffrest mit 1 bis 20 Kohlenstoffatom(en) je Rest, der 1 bis 4 Sauerstoffatom(e) enthalten kann, bedeutet,

$R^1$ gleich oder verschieden ist, einen einwertigen, von aliphatischen Kohlenstoff-Kohlenstoff-Mehrfachbindungen freien Kohlenwasserstoffrest mit 1 bis 8 Kohlenstoffatom(en) je Rest bedeutet,
a 0 oder 1 ist,
b 0, 1, 2 oder 3 ist,
c 0, 1, 2 oder 3, vorzugsweise 0 ist, wobei die Summe a+b+c≤3 ist,
A einen Rest der allgemeinen Formel

$$-(R^2)_d-Y(-CH=CHR^3)_2$$

bedeutet, wobei $R^2$ einen zweiwertigen, von aliphatischen Kohlenstoff-Kohlenstoff-Mehrfachbindungen freien Kohlenwasserstoffrest mit 1 bis 6 Kohlenstoffatom(en) bedeutet,
$R^3$ gleich oder verschieden ist, ein Wasserstoffatom ist oder die Bedeutung von R hat,
Y einen dreiwertigen Kohlenwasserstoffrest mit 2 bis 20 Kohlenstoffatomen, der 1 bis 4 Sauerstoffatom(e) enthalten kann, bedeutet und
d 0 oder 1 ist,
mit der Maßgabe, daß die Organosiliciumverbindungen je Molekül mindestens zwei Einheiten der Formel (I) und mindestens einen Rest A enthalten.

Gegenstand der Erfindung ist weiterhin ein Verfahren zur Herstellung von Alkenylgruppen aufweisenden Organosiliciumverbindungen, dadurch gekennzeichnet, daß Organosiliciumverbindungen mit Einheiten der allgemeinen Formel

$$B_aR_b(R^1O)_cSiO_{\frac{4-(a+b+c)}{2}} \quad \text{(II)},$$

wobei R, $R^1$, a, b und c die oben dafür angegebene Bedeutung haben,

B einen Rest der allgemeinen Formel

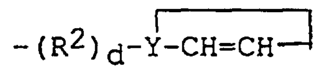

bedeutet, wobei $R^2$, Y und d die oben dafür angegebene Bedeutung haben,
mit der Maßgabe, daß die Organosiliciumverbindungen je Molekül mindestens zwei Einheiten der Formel (II) und mindestens einen Rest B enthalten,
mit α-Olefinen der allgemeinen Formel $R^3$-CH=$CH_2$
in Gegenwart von Metathese-Katalysatoren, ausgewählt aus der Gruppe der Übergangsmetallverbindungen oder -komplexe aus der IV. bis VIII. Nebengruppe des Periodensystems,

umgesetzt werden.

Die erfindungsgemäßen Alkenylgruppen aufweisenden Organosiliciumverbindungen besitzen vorzugsweise eine Viskosität von 1 bis 10.000 bei 25°C, bevorzugt 1 bis 500 bei 25°C und besonders bevorzugt 1 bis 50 bei 25°C.

Die erfindungsgemäßen Alkenylgruppen aufweisenden Organosiliciumverbindungen enthalten vorzugsweise mindestens 2 Reste A, bevorzugt 2 bis 5 Reste A und besonders bevorzugt 2 bis 3 Reste A.

Die erfindungsgemäßen Alkenylgruppen aufweisenden Organosiliciumverbindungen sind vorzugsweise oligomere und polymere Organopolysiloxane.

Beispiele für Reste R sind Alkylreste, wie der Methyl-, Ethyl-, n-Propyl-, iso-Propyl-, n-Butyl-, iso-Butyl-, tert. -Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest. Bevorzugt ist der Methylrest.

Beispiele für Reste $R^1$ sind Alkylreste mit 1 bis 8 Kohlenstoffatom(en), wie der Methyl-, Ethyl-, n-Propyl-, iso-Propyl-, 1-n-Butyl-, 2-n-Butyl-, iso-Butyl- und tert.-Butylrest. Bevorzugt sind der Methyl- und Ethylrest. Beispiele für Alkylreste $R^1$, die durch ein Sauerstoffatom substituiert sind, sind der Methoxyethyl- und der Ethoxyethylrest.

Beispiele für Reste $R^2$ sind solche der Formel -$CH_2$-,

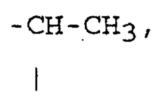

-$CH_2CH_2$-, -$(CH_2)_4$- und -$(CH_2)_6$-,
wobei Reste der Formel

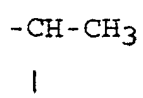

und -$CH_2CH_2$- bevorzugt sind.

Bevorzugt ist R3 ein Wasserstoffatom.

Beispiele für Reste Y sind der

1,2,4-Butantriyl-,
1,3,6-Hexantriyl-,
1,2,4-Cyclopentantriyl- und
der 2-Methylenyl-3,5-bicyclo[2.2.1]heptandiylrest der Formel

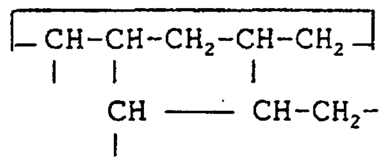 .

Beispiele für Reste A sind der

4(1,7-Octadienyl),
5(1,9-Decadienyl)-,
2(2,4-Divinylcyclopentyl)ethyl,
2,4-Divinylcyclopentyl und der
2(4)-Vinyl-4(2)-1-octenylrest.

Beispiele für Reste B sind der

3-Cyclohexenyl-,
4-Cyclooctenyl-,
5-Norbornenyl-,
2-(5-Norbornenyl)ethyl- und der
2(3)-Dicyclopentadienylrest.

Beispiele für $\alpha$-Olefine sind Ethylen, 1-Octen, 1-Penten, 1-Hexen, 1-Dodecen, wobei Ethylen bevorzugt ist.
Verfahren zur Herstellung der Organosiliciumverbindungen sind dem Fachmann bekannt. 2-(Norbornenyl) ethylsiloxane sind beispielsweise durch Hydrosilylierung von 5-Vinylnorbornen mit Si-gebundenen Wasserstoff aufweisenden Organo(poly)siloxanen erhältlich, und 5-Norbornenylsiloxane sind durch analoge Reaktionen aus Norbornadien, wie in DE-A 41 28 932 (Wacker-Chemie GmbH, offengelegt am 04.03.1993) beschrieben, erhältlich.
Bei dem erfindungsgemäßen Verfahren beträgt das eingesetzte Verhältnis von $\alpha$-Olefine zu Resten B in Organosiliciumverbindung (1) bevorzugt 1 : 1 bis 20 : 1.
Als Metathese-Katalysatoren können auch bei dem erfindungsgemäßen Verfahren die gleichen Katalysatoren eingesetzt werden, die auch bisher bei Metathese-Reaktionen eingesetzt werden konnten.
Bespiele für Übergangsmetallkatalysatoren sind Verbindungen des Titans, Wolframs, Molybdäns und Rutheniums, wobei solche des Rutheniums besonders bevorzugt sind.
Das erfindungsgemäße Verfahren kann unter homogener oder heterogener Katalyse durchgeführt werden. Bevorzugt wird es unter homogener Katalyse durchgeführt.
Bei den homogenen Systemen wird zwischen Einkomponenten- und Mehrkomponenten-Katalysatoren unterschieden. Die Mehrkomponenten-Katalysatoren bestehen vorzugsweise aus Übergangsmetallverbindungen -oder komplexen der IV. bis VII. Nebengruppe des Periodensystems und einem Cokatalysator sowie gegebenenfalls einem sauerstoffhaltigen Promotor. Die Komplexe können halogen- und/oder carbonyl- und/oder nitrosylhaltig sein. Beispiele hierfür sind:

$WCl_6/SnMe_2Et_2O$,
$W(CO)_5(PPh_3)/O_2/EtAlCl_2$ und
$MoCl(NO)(CO)_2(PPh_3)/EtAlCl_2$ (Me = Methyl, Ph = Phenyl).

Weitere Beispiele für Mehrkomponenten-Katalysatoren sind Übergangsmetallkomplexe mit Diazoalkan-Cokatalysatoren:

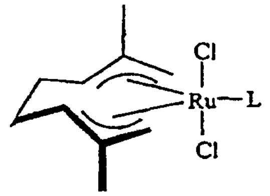

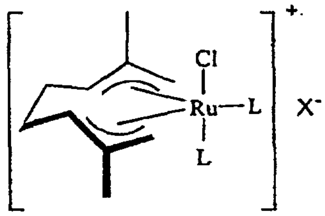

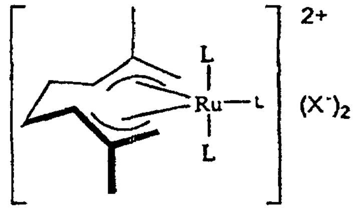

L = $NCMe_2NCPh$, $PPh_3$, $P(OiPr)_3$, $P(Cy)_3$, 3-Me-Pyridin (Me = Methyl, Ph = Phenyl, iPr = iso-Propyl, Cy = Cyclohexyl).

X = $BF_4$, $F_3CSO_3$, Cokatalysator: $N_2CHSiMe_3$ oder $N_2CHCOOEt$.

Als Einkomponenten-Katalysatoren werden vorzugsweise Übergangsmetallcarbenkomplexe der IV. bis VIII. Nebengruppe eingesetzt. Ein Bespiel hierfür ist der sogenannte Schrock-Katalysator:

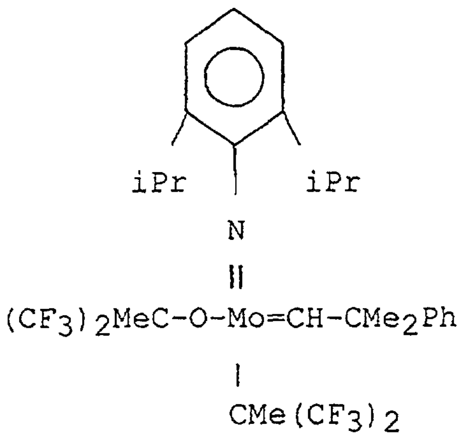

(Me=Methylrest, Ph=Phenylrest, iPr=iso-Propylrest)

Ein bevorzugtes Beispiel für einen Mehrkomponenten-Katalysator ist ein Rutheniumcarbenkomplex, herstellbar aus dem dimeren bisallylischen Rutheniumkomplex, Tricyclohexylphosphan und Trimethylsilyldiazomethan:

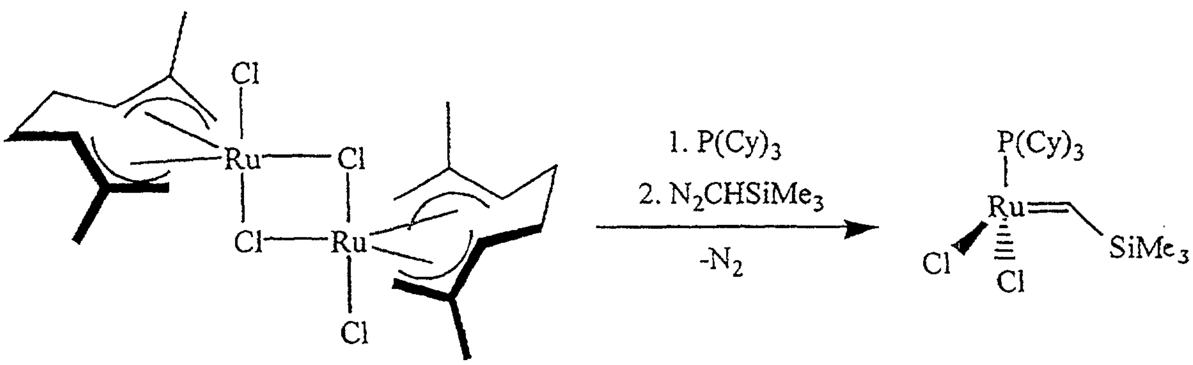


(III)

Ein bevorzugtes Beispiel für einen Einkomponenten-Katalysator ist ein Rutheniumcarbenkomplex vom sogenannten Grubbs-Typ (Polym. Prepr. 35 (1), 688 (1994))der Formel:

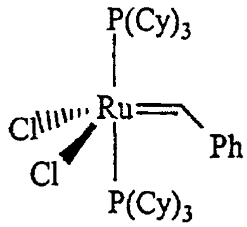

(Grubbs 1995)

(IV)

$RuCl_2(=CHPh)(PCy_3)_2$ (Cy=Cyclohexylrest)

Dieser Einkomponeten-Katalysator besitzt eine hohe Cross-Metatheseaktivität und eine lange Standzeit. Er ist sowohl in polarem als auch in unpolarem Lösungsmittel, wie Methanol oder N-Hexan, löslich. Aufgrund des höheren Lösungsvermögen für Ethylen sind unpolare Lösungsmittel, wie Toluol und n-Hexan, bevorzugt.

Ein weiterer bevorzugter Katalysator ist ein Rutheniumkomplex der Formel

$$RuCl_2(=CH\text{-}CH{=}CPh_2)(PCy_3)_3$$

(Ph = Phenylrest, Cy = Cyclohexylrest).

Bei dem erfindungsgemäßen Verfahren beträgt das Molverhältnis von Übergangsmetall in dem Metathese-Katalysator zu Resten B in der Organosiliciumverbindung vorzugsweise 1 : 100 bis 1 : 100.000, bevorzugt 1 : 500 bis 1 : 5.000.

Das erfindungsgemäße Verfahren wird vorzugsweise beim Druck der umgebenden Atmosphäre, also etwa bei 1 020 hPa (abs.) durchgeführt. Es kann aber auch bei höheren oder niedrigeren Drücken durchgeführt werden. Ferner wird das erfindungsgemäße Verfahren vorzugsweise bei einer Temperatur von -20°C bis 100°C, bevorzugt 0°C bis 80°C, besonders bevorzugt 10°C bis 50°C, durchgeführt.

Ein bevorzugtes Beispiel für das erfindungsgemäße Verfahren ist die Umsetzung von Organosiliciumverbindung mit 1-Octen in Gegenwart des Mehrkomponenten-Ruthenium-Katalysators der Formel (III). Das Molverhältnis des Rutheniums im Ruthenium-Katalysator der Formel (III) zu Resten B in der Organosiliciumverbindung beträgt vorzugsweise 1 : 100 bis 1 : 10.000, bevorzugt 1 : 500. Das Molverhältnis von 1-Octen zu Resten B in der Organosiliciumverbindung beträgt vorzugsweise 1,5 : 1 bis 10 : 1, bevorzugt 3 : 1. Die Cross-Metathese-Reaktion wird vorzugsweise bei einer Temperatur von -10°C bis 80°C, bevorzugt 25°C bis 30°C durchgeführt.

Die Cross-Metathese-Reaktion mit Ethylen wird bevorzugt mit dem stabilen Einkomponenten-Ruthenium-Katalysator der Formel (IV) durchgeführt. Ein bevorzugtes Beispiel für das erfindungsgemäße Verfahren ist daher die Umsetzung von Organosiliciumverbindung mit Ethylen in Gegenwart des Einkomponenten-Ruthenium-Katalysator der Formel (IV). Das Molverhältnis des Rutheniums im Ruthenium-Katalysator der Formel (IV) zu Resten B in der Organosiliciumverbindung beträgt vorzugsweise 1 : 100 bis 1 : 10.000, bevorzugt 1 : 2.000 bis 1: 8.000. Das Molverhältnis von Ethylen zu Resten B in der Organosiliciumverbindung beträgt vorzugsweise 1 : 1 bis 50 : 1, bevorzugt 1 : 1,5 bis 1 : 15. Die Cross-Metathese-Reaktion wird vorzugsweise bei einer Temperatur von -20°C bis 80°C, bevorzugt bei 40°C durchgeführt.

Bei dem erfindungsgemäßen Verfahren können inerte organische Lösungsmittel mitverwendet werden. Beispiele für inerte organische Lösungsmittel sind Toluol, n-Hexan, Methanol, Butanol, Tetrahydrofuran oder Destillationsschnitte von Kohlenwasserstoffen bis ca. 200°C.

Vor dem Aufarbeiten des bei dem erfindungsgemäßen Verfahren erhaltenen Gemisches kann der Metathese-Katalysator unwirksam gemacht werden.

Von den nach dem erfindungsgemäßen Verfahren hergestellten Alkenylgruppen aufweisenden Organosiliciumverbindungen wird vorzugsweise überschüssiges $\alpha$-Olefin sowie gegebenenfalls mitverwendetes inertes organisches Lösungsmittel destillativ entfernt.

Die nach dem erfindungsgemäßen Verfahren erhaltenen Alkenylgruppen aufweisenden Organosiliciumverbindungen können gegebenenfalls anschließend mit Organopolysiloxanen equilibriert werden.

Als Organopolysiloxane werden vorzugsweise solche ausgewählt aus der Gruppe bestehend aus linearen, endständige Triorganosiloxygruppen aufweisenden Organopolysiloxanen der Formel

$$R_3SiO(R_2SiO)_rSiR_3 ,$$

wobei R die oben dafür angegebene Bedeutung hat und
r 0 oder eine ganze Zahl im Wert von 1 bis 1 000, bevorzugt 100 bis 400, ist, und
linearen, endständige Hydroxylgruppen aufweisenden Organopolysiloxanen der Formel

$$HOR_2SiO(SiR_2O)_rSiR_2OH ,$$

wobei R und r die oben dafür angegebene Bedeutung haben.

Das Mengenverhältnis der bei der gegebenenfalls durchgeführten Equilibrierung eingesetzten Organopolysiloxane und Alkenylgruppen aufweisenden Organosiliciumverbindungen wird lediglich durch den gewünschten Anteil der Alkenylgruppen in den bei der gegebenenfalls durchgeführten Equilibrierung erzeugten Organopolysiloxanen und durch die gewünschte mittlere Kettenlänge bestimmt.

Bei dem gegebenenfalls durchgeführten Equilibrieren werden vorzugsweise basische oder saure Katalysatoren, welche die Equilibrierung fördern, eingesetzt. Beispiele für basische Katalysatoren sind Alkalihydroxide, wie Natriumhydroxid und Kaliumhydroxid, Trimethylbenzylammoniumhydroxid und Tetramethylammoniumhydroxid. Bevorzugt sind Alkalihydroxide. Alkalihydroxide werden vorzugsweise in Mengen von 50 bis 10.000 Gew.-ppm (= Teile je Million), insbesondere 500 bis 2.000 Gew.-ppm, jeweils bezogen auf das Gesamtgewicht der eingesetzten, Alkenylgruppen aufweisenden Organosiliciumverbindungen und eingesetzten Organopolysiloxane, verwendet.

Beispiele für saure Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1.000 Gew.-ppm (=Teile je Million), insbesondere 50 bis 200 Gew.-ppm, jeweils bezogen auf das Gesamtgewicht der eingesetzten, Alkenylgruppen aufweisenden Organosiliciumverbindungen und eingesetzten Organopolysiloxane, verwendet.

Die gegebenenfalls durchgeführte Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten, aliphatisch ungesättigte Kohlenwasserstoffreste aufweisenden Organopolysiloxane und eingesetzten Organopolysiloxane, mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die erfindungsgemäßen Alkenylgruppen aufweisenden Organosiliciumverbindungen können in Hydrosilylierungsreaktionen verwendet werden.

Beispiel 1: Umsetzung von 5-Norbornenyl-pentamethyldisiloxan mit 1-Octen

Reaktionsgleichung:

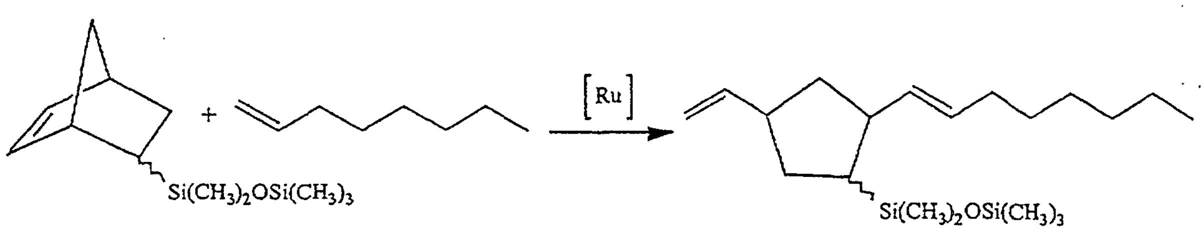


Ein Gemisch aus cis- und trans-Isomeren

Reagenzienverhältnis:
[Ru]/[Cycloolefin]=1/600; ] =1/600; [1-Octen]/[Cycloolefin]=2,4

In einem 100 ml Schlenkkolben werden unter Argon 1,12 g (0,01 mol) 1-Octen in 12 ml Toluol vorgelegt. Um den Ruthenium-Katalysator der Formel (III) in situ darzustellen werden $4{,}3 \cdot 10^{-3}$ g ($0{,}7 \cdot 10^{-5}$ mol) des entsprechenden dimeren bisallylischen Ruthenium(IV)komplexes in 2 ml Toluol gelöst. Die Lösung wird mit $7{,}9 \cdot 10^{-3}$ g ($2{,}8 \cdot 10^{-5}$ mol) Tricyclohexylphosphan (Farbumschlag von violett nach gelb) versetzt und zur 1-Octen-Lösung gegeben. Unmittelbar danach werden 0,014 ml ($2{,}8 \cdot 10^{-5}$ mol) Trimethylsilyldiazomethan zugesetzt und anschließend eine Lösung von 1 g ($4{,}2 \cdot 10^{-3}$ mol) 5-Norbornenyl-pentamethyldisiloxan gelöst in 5 ml Toluol rasch zugetropft. Das Verhältnis Rutheniumkatalysator zu Cycloolefinrest beträgt 1 : 600, das Verhältnis 1-Octen zu Cycloolefinrest beträgt 2,4 : 1. Nach ca. 40 Minuten wird die Reaktionslösung mit 0,01 ml n-Butylvinylether versetzt, um den Katalysator zu desaktivieren. Die Reaktionsmischung wird am Rotationsverdampfer (30°C und 40 mbar) eingeengt. Die tiefgrüne Lösung wird mit 2 g desaktiviertem $Al_2O_3$ versetzt.
Der Feststoff wird abfiltriert und mehrmals mit n-Hexan gewaschen. Das Filtrat wird anschließend am Rotationsverdampfer eingeengt, und schließlich werden Lösungsmittelreste unter Feinvakuum entfernt. Das Produkt wird als farblose, niedrigviskose Flüssigkeit erhalten. Die Ausbeute beträgt 0,97 g ($2{,}8 \cdot 10^{-3}$ mol, 66% d. Th.).

Analysendaten:
$C_{20}H_{40}H_{40}OSi_2$(352,35)
$^1$H-NMR (300 MHz, $CDCl_3$): $\delta$ = 5,7(m,H), 5,5(bs,2H), 4,97-5,03(m,2H), 2,19-2,2(m,2H), 1,96(m,2H), 1,51-1,52(m,5H), 1,34(m,2H), 1,29(4H), 0,96(3H), (9H),-0,1(15H).
IR (Film) $\nu$(cm$^{-1}$): 3078(w), 2955(s,C-H), 1639(w,=CH), 1253(s), 1063(s,SiO), 993(w), 908(m,RCH=$CH_2$), 840(s), 802-778(m).
MS: m/z(%) = 352(M+,3), 337($M^+$-$CH_3$,4), 147($M^+$-$C_{15}H_{25}$).

Beispiel 2: Umsetzung von 2-(5-Norbornenyl)ethylpentamethyldisiloxan mit Ethylen

Reaktionsgleichung:

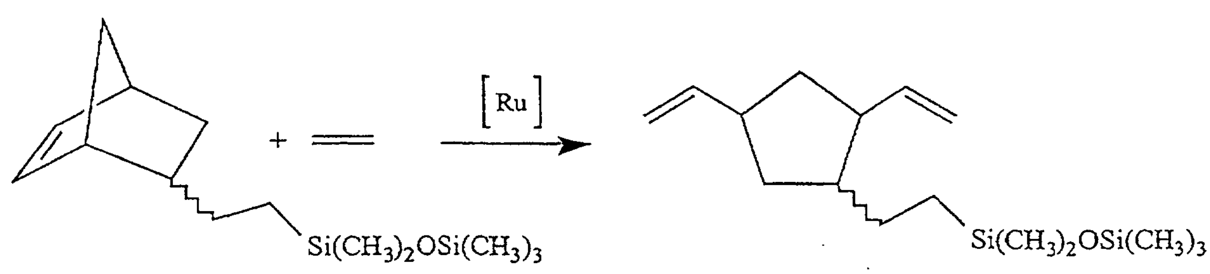


Gemisch aus cis- und trans-Isomeren

Reagenzienverhältnis:
[Ru]/[Cycloolefin]=1/2500; [Ethylen]/[Cycloolefin]=15

In einem Büchi-Autoklav mit 250 ml Glasgefäß und einem elektrischen Rührer werden unter Argon $2{,}5 \cdot 10^{-3}$ g ($3{,}0 \cdot 10^{-6}$ mol) des Rutheniumkatalysators der Formel $RuCl_2(=CHPh)(PCy_3)_2$ (IV) in 100 ml Toluol gelöst (schwachviolette Lösung). Ethylen wird unter starkem Rühren mit 4 bar Überdruck bei Raumtemperatur in den Autoklaven eingeleitet. Nach der Sättigung der Lösung wird die Ethylengaszuführung abgesperrt. 2 g (2 ml, $7{,}5 \cdot 10^{-3}$ mol) 2-(5-Norbornenyl)ethylpentamethyldisiloxan wird in 5 ml Toluol gelöst und unter Argon in den Vorratsbehälter eingeführt. Das Verhältnis Rutheniumkatalysator zu Cycloolefinrest beträgt 1 : 2.500, das Verhältnis Ethylen zu Cycloolefinrest beträgt 15 : 1. Die Cross-Metathese-Reaktion wird durch Einspritzen des 2-(5-Norbornenyl)ethylpentamethyldisiloxans gestartet. Nach einer Reaktionszeit von ca. 20 Minuten wird der Überdruck abgelassen und die Reaktionsmischung unter Rühren entgast. Die Aufarbeitung des Produktes folgt wie unter Beispiel 1 beschrieben. Es werden 1,86 g ($6{,}3 \cdot 10^{-3}$ mol, 84 % d. Th.) 2-(2,4-Divinylcyclopentyl)ethyl-pentamethyldisiloxan erhalten.

Analysendaten:
$C_{14}H_{28}OSi_2$(296,38)
$^1$H-NMR (300 MHz, $CDCl_3$): $\delta$ = 5,6-5,8(m,2H), 4,8-4,95(m,4H), 2,6(ddt,1H), 2,45(dt,1H), 1,7-1,9(m,2H), 1,2-1,5(m, 3H), 0,95-1,05(m,2H), 0,4(m,2H),-0,1(15H).

MS: m/z(%) = 281($M^+$-$CH_3$,6), 253(10,6), 147(100), 133(83), 73(45,5).

Beispiel 3: Umsetzung von 1,3-Bis(5-norbornenyl)tetramethydisiloxan mit Ethylen

Reaktionsgleichung:

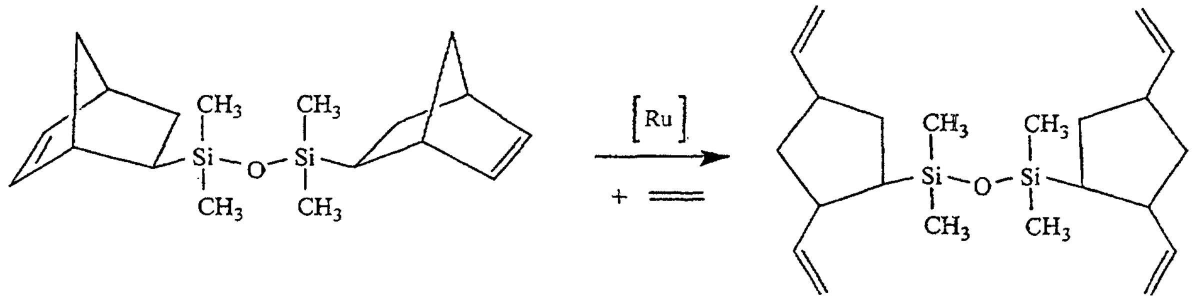


Reagenzienverhältnis:
[Ru] / [Cycloolefin]=1/8000; [Ethylen] / [Cycloolefin]=6

Die Umsetzung wird analog Beispiel 2 durchgeführt. Es werden 200 ml Toluol, 4 bar (0,112 mol) Ethylen, 2 . $10^{-3}$ g ($2,4 \cdot 10^{-6}$ mol) Rutheniumkatalysator der Formel (IV) und 3 g ($9,4 \cdot 10^{-3}$ mol) 1,3-Bis(5-norbornenyl)tetramethyldisiloxan eingesetzt. Das Verhältnis Rutheniumkatalysator zu Cycloolefinrest beträgt 1 : 8.000, das Verhältnis Ethylen zu Cycloolefinrest beträgt 6 : 1. Es werden 2,7 g ($7,2 \cdot 10^{-3}$mol, 77% d.Th.) 1,3-Bis(2,4-divinylcyclopentyl)tetramethyldisiloxan erhalten.
Das $^1$H-NMR-Spektrum ist frei von Signalen der Brückenkopfprotonen des Eduktes 1,3-Bis(5-norbornenyl)tetramethyldisiloxan bei 3,0 ppm.
Die Nebenreaktion der Oligomerisierung beträgt ca. 4%: C-CH=$CH_2$ / C-CH=CH-C = 23 : 1 gegenüber 12 : 1 bei rein statistischem Reaktionsverlauf. Die Reaktion ist ca. doppelt so selektiv wie erwartet.

Analysendaten:
$C_{22}H_{38}OSi_2$(374,37)
$^1$H-NMR (300 MHz, $CDCl_3$): δ = 5,7-5,8(m,4H), 4,8-4,95(m,8H), 2,85(m,4H), 2,5(m,4H),-0,1(12H).
IR (Film) ν($cm^{-1}$): 3076(w), 2950(s,C-H), 2861(m,C-H), 1639(w,=CH), 1166(m), 1253(s,-$SiCH_3$), 1062(s,-SiO), 993(m), 908(s,RCH=$CH_2$), 781(s).

Beispiel 4: Umsetzung von α,ω-Bis(5-norbornenyl)polydimethylsiloxan mit Ethylen

Reaktionsgleichung:

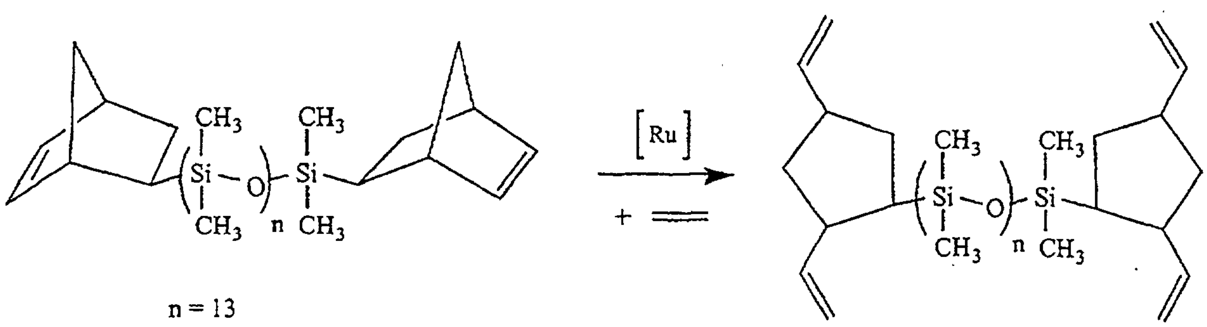


n = 13

Reagenzienverhältnis:
[Ru]/[Cycloolefin]=1/4000; [Ethylen]/[Cycloolefin]=8

Die Umsetzung wird analog Beispiel 2 durchgeführt. Es werden 400 ml Toluol, 2 bar (0,096 mol) Ethylen, $2{,}5 \cdot 10^{-3}$ g ($3 \cdot 10^{-6}$ mol) Rutheniumkatalysator der Formel (IV) und 7 g ($5{,}8 \cdot 10^{-3}$ mol) Bis(5-norbornenyl)polydimethylsiloxan der durchschnittlichen Kettenlänge 14,5 eingesetzt. Das Verhältnis Rutheniumkatalysator zu Cycloolefinrest beträgt 1 : 4.000, das Verhältnis Ethylen zu Cycloolefinrest beträgt 8 : 1. Es werden 6,6 g (90% d.Th.) α,ω-Bis(2,4-divinylcyclopentyl)polydimethylsiloxan erhalten.
Das $^1$H-NMR-Spektrum ist frei von Signalen der Brückenkopfprotonen des Eduktes α,ω-Bis(5-norbornenyl)polydimethylsiloxan bei 2,9 ppm.
Das Ausmaß der Oligomerisierung ist < 0,9 %:
$C\text{-}CH{=}CH_2$ / C-CH=CH-C = 116 : 1 gegenüber 16 : 1 bei rein statistischem Reaktionsverlauf. Die Reaktion ist ca. siebenmal so selektiv wie erwartet.

Analysendaten:
$^1$H-NMR (300 MHz, $CDCl_3$): δ = 5,7-5,8(m,4H), 4,8-4,95(m,8H), 2,85(m,4H), 2,5(m,4H),-0,1(84H).
IR (Film) ν($cm^{-1}$): 3076(w), 2950(s,C-H), 2861(m,C-H), 1639(w,=CH), 1166(m), 1253(s,-$SiCH_3$), 1062(s,-SiO), 993(m), 908(s,$RCH{=}CH_2$), 781(s).

Beispiel 5:

6,5g des α,ω-Bis(2,4-divinylcyclohexyl)-polydimethylsiloxans mit insgesamt 20 mequ. Vinylgruppen, dessen Herstellung in Besipiel 4 beschrieben ist, werden mit 60g Dimethylcyclosiloxan vermischt und auf 140°C erwärmt. Das homogene Siloxangemisch wird mit 200 ppm Phosphornitridchlorid katalysiert und bei gleicher Temperatur zwei Stunden lang equilibriert. Es wird mit 1 g MgO neutralisiert und filtriert, und flüchtige Bestandteile werden bei 3 h Pa/140°C abdestilliert. Es werden 55 g eines klaren Siliconöls mit jeweils zwei Vinylgruppen pro Kettenende erhalten.

Das Öl hat eine Viskosität von 480 $mm^2$/s bei 25°C und eine Jodzahl von 9,0.

## Patentansprüche

1. Alkenylgruppen aufweisende Organosiliciumverbindungen mit Einheiten der allgemeinen Formel

$$A_aR_b(R^1O)_cSiO_{\frac{4-(a+b+c)}{2}} \quad (I),$$

wobei R gleich oder verschieden ist, einen einwertigen, von aliphatischen Kohlenstoff-Kohlenstoff-Mehrfachbindungen freien Kohlenwasserstoffrest mit 1 bis 20 Kohlenstoffatom(en) je Rest, der 1 bis 4 Sauerstoffatom(e) enthalten kann, bedeutet,
$R^1$ gleich oder verschieden ist, einen einwertigen, von aliphatischen Kohlenstoff-Kohlenstoff-Mehrfachbindungen freien Kohlenwasserstoffrest mit 1 bis 8 Kohlenstoffatom(en) je Rest bedeutet,
a 0 oder 1 ist,
b 0, 1, 2 oder 3 ist,
c 0, 1, 2 oder 3 ist, wobei die Summe a+b+c≤3 ist,
A einen Rest der allgemeinen Formel

$$-(R^2)_d\text{-}Y(\text{-}CH{=}CHR^3)_2$$

bedeutet, wobei $R^2$ einen zweiwertigen, von aliphatischen Kohlenstoff-Kohlenstoff-Mehrfachbindungen freien Kohlenwasserstoffrest mit 1 bis 6 Kohlenstoffatom(en) bedeutet,
$R^3$ gleich oder verschieden ist, ein Wasserstoffatom ist oder die Bedeutung von R hat,
Y einen dreiwertigen Kohlenwasserstoffrest mit 2 bis 20 Kohlenstoffatomen, der 1 bis 4 Sauerstoffatom(e) enthalten kann, bedeutet und
d 0 oder 1 ist,

mit der Maßgabe, daß die Organosiliciumverbindungen je Molekül mindestens zwei Einheiten der Formel (I) und mindestens einen Rest A enthalten.

**2.** Verfahren zur Herstellung von Alkenylgruppen aufweisenden Organosiliciumverbindungen nach Anspruch 1, **dadurch gekennzeichnet, daß**

Organosiliciumverbindungen mit Einheiten der allgemeinen Formel

$$B_aR_b(R^1O)_cSiO_{\frac{4-(a+b+c)}{2}} \qquad (II),$$

wobei R, $R^1$, a, b und c die oben dafür angegebene Bedeutung haben,
B einen Rest der allgemeinen Formel

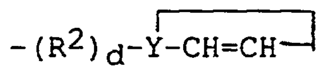

bedeutet, wobei $R^2$, Y und d die oben dafür angegebene Bedeutung haben,
mit der Maßgabe, daß die Organosiliciumverbindungen je Molekül mindestens zwei Einheiten der Formel (II) und mindestens einen Rest B enthalten,
mit $\alpha$-Olefinen der allgemeinen Formel $R^3$-CH=$CH_2$

in Gegenwart von Metathese-Katalysatoren, ausgewählt aus der Gruppe der Übergangsmetallverbindungen oder - komplexen aus der IV. bis VIII. Nebengruppe des Periodensystems, umgesetzt werden.

**3.** Verfahren nach Anspruch 2, **dadurch gekennzeichnet, daß** die Umsetzung unter homogener Katalyse erfolgt.

**4.** Verfahren nach Anspruch 2 oder 3, **dadurch gekennzeichnet, daß** als Metathese-Katalysatoren Rutheniumkomplexe eingesetzt werden.

**5.** Verfahren nach Anspruch 2, 3 oder 4, **dadurch gekennzeichnet, daß** als Metathese-Katalysator ein Rutheniumkomplex der Formel $RuCl_2(=CHPh)(PCy_3)_2$ (Ph=Phenylrest, Cy=Cyclohexylrest) eingesetzt wird.

**6.** Verfahren nach einem der Ansprüche 2, 3, 4 oder 5, **dadurch gekennzeichnet, daß** als $\alpha$-Olefin Ethylen eingesetzt wird.

**7.** Verfahren nach Anspruch 2, 3 oder 4, **dadurch gekennzeichnet, daß** als Metathese-Katalysator ein Rutheniumkomplex der Formel $RuCl_2(=CH\text{-}CH=CPh_2)(PCy_3)_3$ (Ph = Phenylrest, Cy = Cyclohexylrest) eingesetzt wird.

## Claims

**1.** Organosilicon compounds containing alkenyl groups and comprising units of the formula

$$A_aR_b(R^1O)_cSiO_{\frac{4-(a+b+c)}{2}} \qquad (I),$$

where R are identical or different and are each a monovalent hydrocarbon radical which is free of aliphatic carbon-carbon multibonds, has from 1 to 20 carbon atom(s) per radical and may contain from 1 to 4 oxygen atom(s),
$R^1$ are identical or different and are each a monovalent hydrocarbon radical which is free of aliphatic carbon-carbon multiple bonds and has from 1 to 8 carbon atom(s) per radical,
a is 0 or 1,
b is 0, 1, 2 or 3,
c is 0, 1, 2 or 3, where the sum a+b+c $\leq$ 3,
A is a radical of the formula

$$-(R^2)_d-Y(-CH=CHR^3)_2$$

where $R^2$ is a divalent hydrocarbon radical which is free of aliphatic carbon-carbon multiple bonds and has from 1 to 6 carbon atom(s),
$R^3$ are identical or different and are each a hydrogen atom or are as defined for R,
Y is a trivalent hydrocarbon radical which has from 2 to 20 carbon atoms and may contain from 1 to 4 oxygen atom(s) and
d is 0 or 1,

with the proviso that the organosilicon compound has at least two units of the formula (I) and at least one radical A per molecule.

**2.** Process for preparing organosilicon compounds containing alkenyl groups according to Claim 1, **characterized in that** organosilicon compounds comprising units of the formula

$$B_aR_b(R^1O)_cSiO_{\frac{4-(a+b+c)}{2}} \quad \text{(II),}$$

where R, $R^1$ a, b and c are as defined above,
B is a radical of the formula

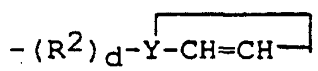

$R^2$, Y and d are as defined above,
with the proviso that the organosilicon compounds have at least two units of the formula (II) and at least one radical B per molecule,
are reacted with α-olefins of the formula $R^3$-CH=$CH_2$
in the presence of metathesis catalysts selected from the group consisting of transition metal compounds or complexes of transition groups IV to VIII of the Periodic Table.

**3.** Process according to Claim 2, **characterized in that** the reaction is homogeneously catalysed.

**4.** Process according to Claim 2 or 3, **characterized in that** the metathesis catalysts used are ruthenium complexes.

**5.** Process according to Claim 2, 3 or 4, **characterized in that** the metathesis catalyst used is a ruthenium complex of the formula $RuCl_2$ (=CHPh) $(PCy_3)_2$ (Ph=phenyl radical, Cy=cyclohexyl radical).

**6.** Process according to any of Claims 2, 3, 4 and 5, **characterized in that** the α-olefin used is ethylene.

**7.** Process according to Claim 2, 3 or 4, **characterized in that** the metathesis catalyst used is a ruthenium complex of the formula $RuCl_2$ (=CH-CH=$CPh_2$) $(PCy_3)_3$ (Ph = phenyl radical, Cy = cyclohexyl radical).

## Revendications

**1.** Composés organosiliciés comportant des groupes alcényle, et comportant des motifs de formule générale

$$A_aR_b(R^1O)_cSiO_{\frac{4-(a+b+c)}{2}} \quad \text{(I)}$$

dans laquelle R est le même ou différent, et représente un radical hydrocarboné monovalent exempt de liaisons multiples carbone-carbone aliphatiques, ayant de 1 à 20 atome(s) de carbone par radical, qui peut contenir de 1 à 4 atome(s) d'oxygène,

$R^1$ est le même ou différent, et représente un radical hydrocarboné monovalent exempt de liaisons multiples carbone-carbone aliphatiques, ayant de 1 à 8 atome(s) de carbone par radical,
a est 0 ou 1,
b est 0, 1, 2 ou 3,
c est 0, 1, 2 ou 3,
la somme a+b+c étant ≤3,
A représente un radical de formule générale

$$-(R^2)_d-Y(-CH=CHR^3)_2$$

dans laquelle $R^2$ représente un radical hydrocarboné divalent exempt de liaisons multiples carbone-carbone aliphatiques, ayant de 1 à 6 atome(s) de carbone,
$R^3$ est le même ou différent, est un atome d'hydrogène ou a la signification de R,
Y représente un radical hydrocarboné trivalent ayant de 2 à 20 atomes de carbone, qui peut comporter de 1 à 4 atome(s) d'oxygène, et
d est 0 ou 1,

étant entendu que les composés organosiliciés contiennent au moins deux motifs de formule (I) et au moins un radical A par molécule.

2. Procédé pour la préparation de composés organosiliciés comportant des groupes alcényle, selon la revendication 1, **caractérisé en ce qu'**on fait réagir des composés organosiliciés comportant des motifs de formule générale

$$B_aR_b(R^1O)_cSiO_{\frac{4-(a+b+c)}{2}} \qquad (II)$$

dans laquelle R, $R^1$, a, b et c ont les significations indiquées plus haut pour ces symboles,
B représente un radical de formule générale

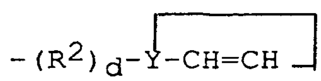

dans laquelle $R^2$, Y et d ont les significations indiquées plus haut pour ces symboles,
étant entendu que les composés organosiliciés contiennent au moins deux motifs de formule (II) et au moins un radical B par molécule,
avec des α-oléfines de formule générale $R^3$-CH=$CH_2$, en présence de catalyseurs de métathèse, choisis dans le groupe des composés contenant des métaux de transition ou des complexes d'éléments des groupes IV à VIII du tableau périodique.

3. Procédé selon la revendication 2, **caractérisé en ce que** la réaction s'effectue sous catalyse homogène.

4. Procédé selon la revendication 2 ou 3, **caractérisé en ce qu'**on utilise comme catalyseurs de métathèse des complexes de ruthénium.

5. Procédé selon la revendication 2, 3 ou 4, **caractérisé en ce qu'**on utilise comme catalyseur de métathèse un complexe de ruthénium de formule $RuCl_2(=CHPh)(PCy_3)_2$ (Ph = radical phényle, Cy = radical cyclohexyle).

6. Procédé selon l'une quelconque des revendications 2, 3, 4 ou 5, **caractérisé en ce qu'**on utilise comme α-oléfine l'éthylène.

7. Procédé selon la revendication 2, 3 ou 4, **caractérisé en ce qu'**on utilise comme catalyseur de métathèse un complexe de ruthénium de formule $RuCl_2(=CH-CH=CPh_2)(PCy_3)_3$ (Ph = radical phényle, Cy = radical cyclohexyle).